# DEMANDE DE BREVET EUROPEEN

(11) **EP 1 199 413 A1**
(43) Date de publication de la demande: **24.04.2002**
(21) Numéro de dépôt: 01402727.0
(22) Date de dépôt: 19.10.2001
(51) Int. Cl.: E03C 1/02, E03C 1/00, E03C 1/05, A61H 33/00

(54) **Dispositif de balneotherapie**

(30) Priorité: 19.10.2000 FR 0013385
(71) Demandeur: Technique et Seduction, 45340 Juranville (FR)
(72) Inventeur: Barreau, Jacky, 45340 Juranville (FR)
(74) Mandataire: Breesé, Pierre

(57) **Abrégé**

Dispositif de balnéothérapie comprenant un ensemble de vannes (2) commandant des buses (6) d'injection de fluides sous pression.

Selon l'invention, chaque vanne (2) est reliée à une petite électrovanne auxiliaire (1) qui lui applique la pression de l'eau du réseau (R).

## Description

La présente invention a pour objet un dispositif de balnéothérapie, du type douche ou baignoire, permettant d'appliquer sur le corps des jets d'eau ou de mélange eau-air, sous pression.

De tels dispositifs sont maintenant très répandus. Les plus perfectionnés comprennent des moyens dits de drainage permettant d'injecter séquentiellement des jets d'eau, éventuellement mélangés à de l'air comprimé sur les différentes parties du corps ou sur certaines parties du corps seulement.

À cet effet, un ensemble ou rampe d'électrovannes, est commandé par un automate incluant un microprocesseur. L'automate ouvre et ferme les électrovannes qui alimentent (ou non), en fluide sous pression, des canalisations et des injecteurs judicieusement disposés dans une colonne de douche ou dans le fond et/ou les côtés d'une baignoire.

On connaît en particulier le brevet DE4431127 qui décrit un mélangeur commandé par une vanne pilote électromagnétique ainsi que le brevet allemand DE29618768 décrivant un système de commande de pommes de douche comprenant deux électrovannes d'entrée et une électrovanne de sortie.

Le brevet américain US5835130 décrit un système de commande d'une douche par un circuit prenant en compte la distance entre le sujet et la pomme de douche.

Le problème technique que posent les électrovannes standard à clapet ou à membrane utilisées est que celles-ci présentent des voies et des trajets tourmentés qui freinent considérablement le débit d'eau de la pompe d'hydromassage. De plus, la moindre impureté peut obturer l'orifice d'annulation de pression de la vanne empêchant ainsi son fonctionnement.

Par ailleurs, l'ouverture ou la fermeture des électrovannes standard par des électroaimants agissant sur les clapets ou les membranes occasionne un bruit gênant.

Un premier objet de l'invention est de pallier ces inconvénients. Elle repose sur l'idée qu'il est possible d'utiliser une vanne à ouverture totale à grand débit et totalement silencieuse mais qui, pour son fonctionnement, nécessite habituellement une puissance extérieure (air comprimé, pression hydraulique, etc.) qui n'est pas habituellement disponible dans les foyers en actionnant ladite vanne par la pression de distribution d'eau qui peut varier de 1,5 à 5 bars.

Selon l'invention, le dispositif de distribution de fluide sous pression comprenant un ensemble de vannes correspondant aux points d'injection, commandées par un automate, est caractérisé en ce que chaque vanne est reliée à une petite électrovanne auxiliaire qui applique sur une entrée de la vanne la pression de l'eau du réseau sur un piston dont la seconde extrémité porte un clapet de fermeture de la voie de fluide sous pression, le piston étant rappelé vers le haut par un ressort, l'eau du réseau introduite dans la vanne étant évacuée par une canalisation de vidange.

Ainsi, c'est la pression de l'eau du réseau qui est utilisée comme moyen de puissance de commande des vannes. La canalisation de vidange peut être reliée directement à l'électrovanne auxiliaire, un seul conduit permettant l'introduction de l'eau dans la vanne et son évacuation.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une vue schématique d'une installation selon l'invention ;
- la figure 2, une vue en coupe d'une vanne en position ouverte ;
- la figure 3, la vue de la même vanne en position fermée ;

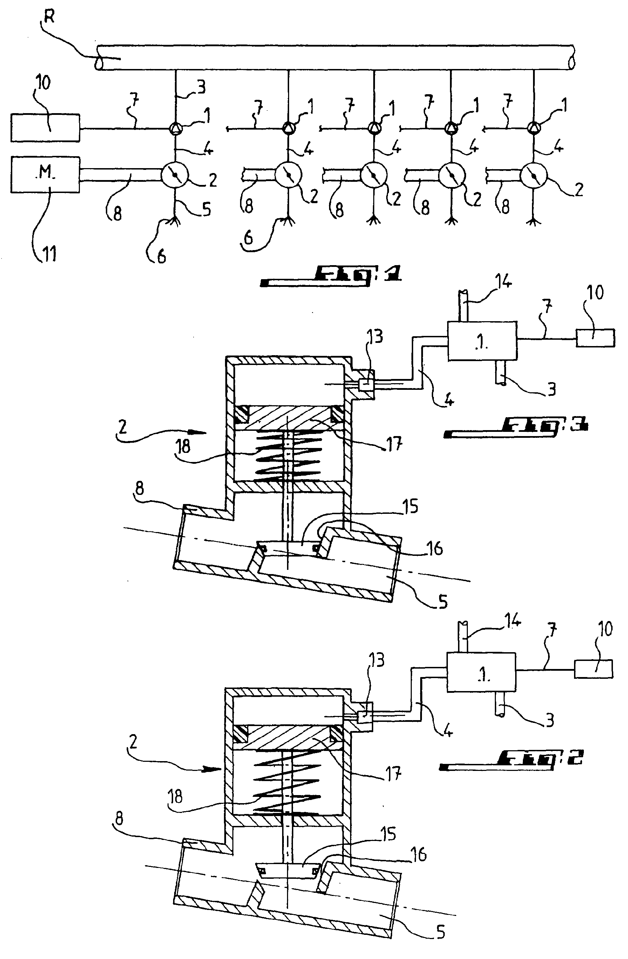

Sur l'ensemble des figures, les mêmes références désignent les mêmes éléments. Sur la figure 1, on voit que l'installation comprend un ensemble d'électrovannes auxiliaires 1 dont chacune est reliée à une vanne 2. Les électrovannes 1 sont connectées, du point de vue électrique par une liaison 7 à un automate 10 qui commande leur ouverture en fonction d'un programme ou de commandes particulières.

Bien entendu, l'invention porte également sur des systèmes mixtes où une partie seulement des vannes (2) sont commandées chacune par une vanne auxiliaire.

D'un point de vue hydraulique, une électrovanne 1 est reliée en entrée, par une canalisation 3, au réseau de distribution d'eau R. Sa sortie est connectée par une canalisation 4 à une vanne 2. Un échappement 14 situé au-dessus de l'électrovanne 1 permet l'évacuation de l'eau du réseau utilisée pour pousser le piston 17.

Chaque vanne 2 est connectée en entrée de commande à une électrovanne 1, par la canalisation 4 et est reliée, à un étage 11 incluant un moteur de surpression par une canalisation 8. Une vanne 2 permet ainsi d'injecter de l'eau pressurisée, par la canalisation 5, dans l'injecteur 6.

Sur les figures 2 et 3 est représentée une vanne de type généralement connu dont la voie de passage 8,5 est reliée d'une part à l'étage 11 par une canalisation 8 et, d'autre part, à la canalisation 5 se terminant par un injecteur 6 intégré dans les parois d'une baignoire ou d'une douche. Le corps de vanne inclut un ajutage 13 d'entrée et de sortie de l'eau du réseau qui est évacuée par une sortie 14 de la vanne 1. La vanne 2 inclut également un clapet 15 destiné à permettre l'obturation du siège 16 de la vanne ce qui interrompt la circulation d'eau entre l'étage 11 et l'injecteur 6 commandé par la vanne 2 considérée. Ce clapet est solidaire d'un piston 17 armé par un ressort 18, taré en fonction de la pression locale d'eau de 1,5 à 5 bars.

L'entrée de l'eau du réseau dans la vanne 2 et son évacuation pourraient être obtenues au moyen de deux ajutages différents.

Le fonctionnement de la vanne est le suivant :

A partir de la position représentée sur la figure 2, lorsque l'électrovanne 1 à laquelle elle est reliée est ouverte, l'eau du réseau entre dans l'ajutage 13 dans le corps de la vanne. La pression de l'eau du réseau de distribution fait descendre le piston 17 et par suite le clapet 15 contre le siège 16 ce qui obture la voie 8,5. Le ressort 18 est comprimé comme représenté sur la figure 3.

Dès que l'électrovanne 1 n'est plus pilotée par l'automate 10, la pression de l'eau du réseau disparaît et le passage 14 de mise à l'égout de l'eau du réseau est ouvert. Le ressort 18 se détend, ce qui soulève le piston 17 et par suite le clapet 15, l'eau du réseau contenue dans le corps de la vanne étant expulsée par l'ajutage 14 dans une canalisation de récupération ou de vidange (non représentée).

Bien entendu, une vanne peut être construite de manière à ce qu'au repos, elle soit maintenue en position fermée comme sur la figure 3 et ouverte, comme sur la figure 2, par application de la pression d'eau du réseau au-dessous du piston 15, l'ajutage 13 se trouvant positionné sous le piston.

Il va de soi que de nombreuses variantes peuvent être apportées, notamment par substitution de moyens techniques équivalents, sans sortir pour cela du cadre de l'invention.

## Revendications

1. Dispositif de distribution de fluides sous pression, notamment pour la balnéothérapie, comprenant un ensemble de vannes (2) correspondant aux points d'injection (6) du fluide sous pression, commandées par un automate (10) ouvrant ou fermant une voie de passage (8) des fluides sous pression, **caractérisé en ce que** certaines au moins des vannes (2) sont reliées chacune à une électrovanne auxiliaire (1) qui applique, sur un ajutage (13) de la vanne, la pression de l'eau du réseau sur un piston (17) actionnant un clapet (15) de fermeture de la voie (8,5) de fluide sous pression.

2. Dispositif de distribution selon la revendication 1, **caractérisé en ce que** ledit piston est rappelé par un ressort (18), le corps de la vanne (2) étant relié à une canalisation de vidange (14).

3. Dispositif de distribution selon la revendication 1 ou 2, **caractérisé en ce que** la canalisation de vidange (14) est reliée à l'électrovanne auxiliaire (1) l'eau du réseau introduite dans la vanne (2) étant évacuée par l'ajutage (13).

4. Dispositif de distribution selon l'une quelconque des revendications précédentes, **caractérisé en ce que** la voie (8) est reliée à un étage (11) appliquant par une pompe, une surpression à l'eau injectée dans la vanne (2) par une canalisation (8).
